# EUROPÄISCHE PATENTSCHRIFT

(11) **EP 0 633 185 B1**
(45) Veröffentlichungstag und Bekanntmachung des Hinweises auf die Patenterteilung: **27.11.1996**
(21) Anmeldenummer: 94110319.4
(22) Anmeldetag: 02.07.1994
(51) Int. Cl.: B64F 1/22

(54) **Flugzeugschlepper ohne Schleppstange**
Tractor for aircraft without a towing bar
Remorqueur d'avion pour barre de remorquage

(30) Priorität: 09.07.1993 DE 4322985
(43) Veröffentlichungstag der Anmeldung: 11.01.1995
(73) Patentinhaber: MAN Gutehoffnungshütte Aktiengesellschaft, 46145 Oberhausen (DE)
(72) Erfinder: Franken, Wilhelm, Dipl.-Ing., D-46487 Wesel (DE); Weigardt, Gerhard, Dipl.-Ing., D-46147 Oberhausen (DE); Michaelsen, Lars Torsten, Dipl.-Ing., D-58313 Herdecke (DE)

(56) Entgegenhaltungen:
- EP-A- 0 269 685
- EP-A- 0 331 363
- EP-A- 0 394 534
- EP-A- 0 394 535
- WO-A-90/14266
- WO-A-92/13762
- DE-A- 4 129 407

## Beschreibung

Die Erfindung betrifft einen Flugzeugschlepper ohne Schleppstange mit einem mittels achsparalleler Knickachse geteiltem Fahrgestell, dessen angetriebene Vorderachse an einem Vorderteil und dessen Hinterachsgetriebe an Hubschwingen befestigt sind, wodurch das Hinterteil des Fahrgestells eine gabelförmige Ausnehmung zur Aufnahme der Bugräder des Flugzeuges bildet und wobei die Aufnahmevorrichtung für die Bugräder innerhalb dieser Ausnehmung mit dem Vorderteil des Fahrgestells verbunden ist.

Stangenlose Flugzeugschlepper zum Bugsieren von Flugzeugen für Flugzeugbewegungen auf Flugplätzen sind seit Mitte der 80er Jahre bekannt. Sie werden inzwischen sowohl für Operationen wie das Push-Back, Schleppmanöver in Flugzeugwerften, Hallen und auch als Schleppfahrzeuge für längere Strecken innerhalb des Flughafengeländes benutzt.

Der Schlepper zum Bugsieren eines Flugzeuges ohne Schleppstange nach der EP 0 269 685 B1, der auch für Flugzeugbewegungen mit höheren Geschwindigkeiten über größere Entfernungen ausgelegt ist, hat sich im Einsatz auf in- und ausländischen Flughäfen bewährt.

Ein anderes stangenloses Schleppfahrzeug nach der DE 41 29 407 A1, das kürzer und kompakter baut und außerdem eine niedrigere Antriebsleistung aufweist als das zuvor genannte Fahrzeug, ist vorrangig für den Einsatz als Push-Back-Schlepper gedacht, d.h. für das Manövrieren von Flugzeugen von der Fluggastbrücke zum Vorfeld.

Aufgabe der Erfindung ist es, einen stangenlosen Flugzeugschlepper zu schaffen, der für die Durchführung jedweder Flugzeugbewegung, die auf einem Flughafengelände erforderlich wird, geeignet ist. Der Flugzeugschlepper soll in der Lage sein, auch sehr hohe Bugradlasten (z.B. 500 kN) aufzunehmen. Die Aufnahmekinematik des Flugzeugschleppers soll ausgelegt sein für Verkehrsflugzeuge mit sehr kleinem Bugraddurchmesser (z.B. ca. 600 mm Durchmesser) bis zu sehr großen Bugraddurchmessern (z.B. ca. 1250 mm Durchmesser).

Diese Aufgaben werden bei einem Flugzeugschlepper nach der eingangs genannten Art in der Weise gelöst wie es im Hauptanspruch angegeben ist. Mit den Merkmalen des Unteranspruchs wird der erfindungsgemäße Flugzeugschlepper vorteilhaft ausgestaltet.

Wie von dem Schleppfahrzeug nach der EP 0 269 685 B1 bekannt, sind auch bei dem erfindungsgemäßen Schlepper Vorder- und Hinterteil des Fahrgestells getrennt ausgebildet und mittels einer einzigen, zur Vorder- und Hinterachse parallel ausgebildeten Knickachse miteinander verbunden. Zur Aufnahme der Bugräder des Flugzeuges wird das Hinterteil des Flugzeugschleppers, wie beim Schleppfahrzeug nach der o.g. Druckschrift, mittels Zylinder-Kolben-Aggregaten abgesenkt und für den Transport des Flugzeuges mit eben diesen Aggregaten in die gestreckte Fahrgestellage gebracht.

Beim erfindungsgemäßen Flugzeugschlepper sind eine Pendeltraverse und die Hubplattform mit den an ihr angelenkten Teleskoparmen sowie eine Quertraverse und Längslenker mechanisch über Koppelglieder mit den Hubschwingen des Fahrgestell-Hinterteils verbunden, so daß bei eingeknicktem Fahrgestell die Bugradaufnahmevorrichtung nach unten auf die Fahrbahn bzw. leicht über die Fahrbahn abgesenkt ist und bei gestrecktem Fahrgestell automatisch in eine definierte Transportlage angehoben wird.

Die aus der Hubplattform, der Pendeltraverse, den Teleskoparmen mit schwenkbaren Greifarmen und der Push-Out-Traverse, der Quertraverse, den Längslenkern und dem Pendelbolzen bestehende Bugradaufnahmevorrichtung ist in der Lage, Bugräder von Verkehrsflugzeugen praktisch jeden Typs aufzunehmen und der Flugzeugschlepper ist antriebsmäßig so ausgelegt, daß das Fahrzeug auch mit sehr hohen Bugradlasten und somit großen aufgesattelten Flugzeugen jegliche auf einem Flughafen geforderten Manövrierbewegungen ausführen kann.

Die Hubplattform ist mit Schwenklagern an der Pendeltraverse und über die Gelenklager der Längslenker mit dem Vorderteil des Schlepper-Fahrgestells verbunden.

Die Pendeltraverse ist über Schwenklager mit dem Pendelbolzen und mit der Quertraverse verbunden.

Bei Kurvenfahrt des Flugzeugschleppers ist infolge der Pendellagerung der Pendeltraverse in Verbindung mit den Schwenklagern der Hubplattform eine gleichzeitige Pendelbewegung der Hubplattform und der Pendeltraverse im Umfang der möglichen Schwenkwinkel gewährleistet.

Da die Teleskoparme mit ihren Greifarmen und die Push-Out-Traverse ebenfalls durch Schwenklager auf der Pendeltraverse und über Stellglieder stufenlos höhenverstellbar an der Hubplattform angelenkt sind, führen auch diese Elemente der Bugradaufnahmevorrichtung, zusammen mit der Hubplattform und der Pendeltraverse, die Pendelbewegungen aus.

Ein besonderer Vorteil der erfindungsgemäßen Bugrad-Aufnahmekinematik mit stufenlos höhenverstellbaren Teleskoparmen ist darin zu sehen, daß damit für die gesamte Bandbreite der Bugrad-Durchmesser zu jedem Zeitpunkt ein optimaler Angriffspunkt an das jeweilige Bugrad erzielt wird, d.h. beim Aufnehmen des Bugrades, beim Verzurren desselben auf der Hubplattform, beim Transport und schließlich beim Absetzen auf die Fahrbahn.

Der Pendelbolzen ist vorteilhaftweise formschlüssig innerhalb der Pendeltraverse angeordnet und über Schwenklager der Quertraverse mit dem Vorderteil des Fahrgestells verbunden. Somit entstehen keine zusätzlichen Kräfte auf das Bugrad, die aus der Anlenkung der Aufnahmevorrichtung am Vorderteil resultieren.

Ein Ausführungsbeispiel der Erfindung wird nachstehend anhand von fünf schematischen Zeichnungen näher erläutert.

Es zeigen:
- Fig.1: eine Draufsicht der erfindungsgemäßen Bugrad-Aufnahmevorrichtung,
- Fig.2: eine Seitenansicht der Aufnahmevorrichtung mit noch auf der Fahrbahn stehenden Bugrädern,
- Fig.3: eine Seitenansicht der Aufnahmevorrichtung mit auf der Hubplattform befindlichen Bugrädern,
- Fig.4: eine Seitenansicht ähnlich Fig.3 mit Darstellung des kompletten Fahrgestell-Hinterteils und
- Fig.5: eine Seitenansicht ähnlich Fig.4, jedoch mit verzurrten, in Transportstellung befindlichen Bugrädern.

Bei allen Patentfiguren ist auf die Darstellung des kompletten Fahrgestell-Vorderteils bzw. des Schleppfahrzeuges als Ganzes mit Vorderachse und Vorderrädern, Kabine für den Schlepperfahrer, Schlepperantrieb etc. verzichtet worden, da diese Merkmale dem Stand der Technik angehören.

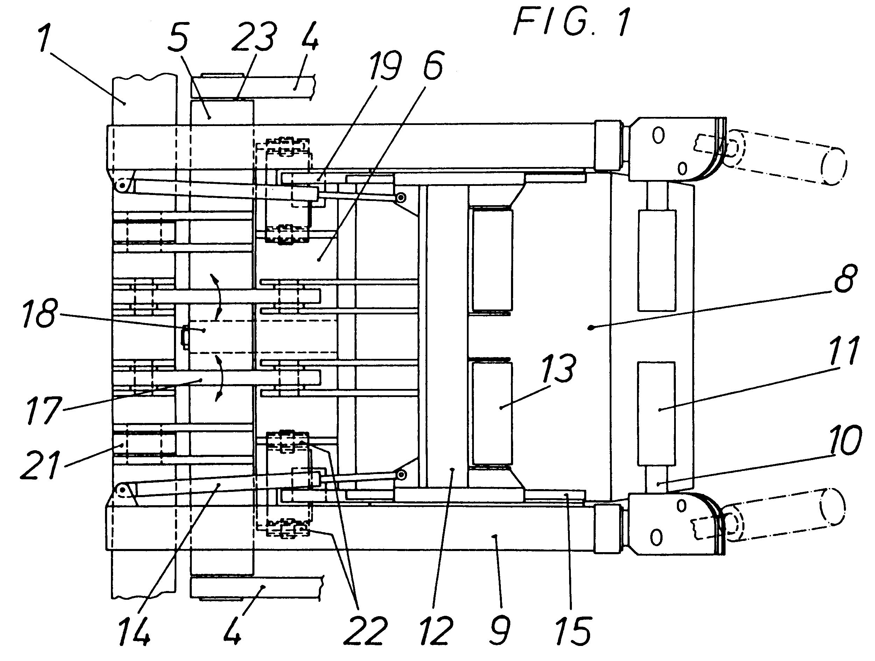

In der Draufsicht gemäß Fig.1 erkennt man die Aufnahmevorrichtung für die Bugräder des Flugzeugschleppers. Die Unterstützungfläche der Hubplattform (7) ist mit (8) bezeichnet. Seitlich von der Hubplattform (7) sind die Teleskoparme (9) mit den Greifarmen (10) und den Rollen (11) dargestellt. Die Greifarme sind nach innen schwenkbar.

An den Innenseiten der Teleskoparme (9) befinden sich die Längsführungen (15) für die Push-Out-Traverse (12). Die Push-Out-Traverse (12) kann mit Hilfe einer Verschiebeeinrichtung (14) hin- und hergeschoben werden. An der Push-Out-Traverse sind drehbare Rollen (13) angeordnet. Im Ausführungsbeispiel ist als Verschiebeeinrichtung (14) für die Push-Out-Traverse (12) ein Hydraulikzylinder dargestellt. Die Verschiebeeinrichtung kann jedoch auch einen elektrischen Antrieb aufweisen.

Die Hubplattform (7) ist über Schwenklager (19) mit der Pendeltraverse (6) verbunden und die Pendeltraverse (6) ist wiederum über den Pendelbolzen (18) über (nicht dargestellte) Schwenklager mit der Quertraverse (5) verbunden.

Die Quertraverse (5) weist eine Anlenkung mittels Schwenklagern (21) am Vorderteil (1) des Schlepper-Fahrgestells auf.

Angedeutet ist in Fig.1 die Kopplung der Aufnahmevorrichtung mit den Hubschwingen des Fahrgestell-Hinterteils über Koppelglieder (4).

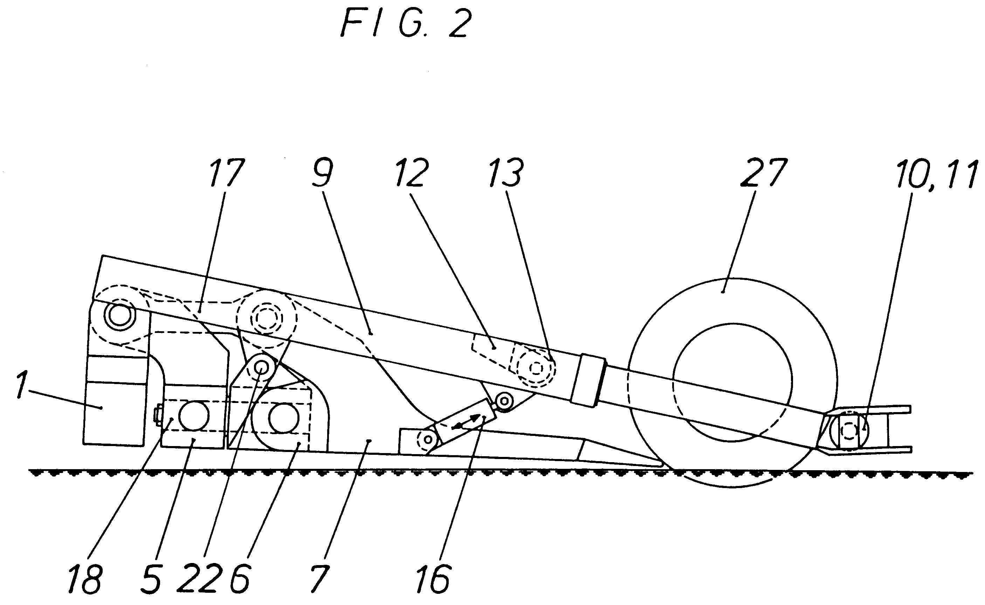

Gemäß Fig.2 befindet sich der Flugzeugschlepper mit der Hubplattform (7) seiner Aufnahmevorrichtung vor den Bugrädern (27) des Flugzeugs. Die Teleskoparme (9) sind abwärts geschwenkt, die Stellglieder (16) sind eingefahren, die Greifarme (10) der Teleskoparme haben die Bugräder (27) umfaßt.

Man erkennt einen Teil des Fahrgestell-Vorderteils (1), die Quertraverse (5), ferner die Pendeltraverse (6). Gestrichelt dargestellt sind ein Längslenker (17) und die Push-Out-Traverse (12) mit den Rollen (13).

Die Hubplattform (7) ist mit den Schwenklagern (19) an der Pendeltraverse (6) und über die Gelenklager (20) der Längslenker (17) mit dem Vorderteil (1) des Fahrgestells verbunden.

Die Pendeltraverse (6) ist über den Pendelbolzen mit Schwenklagern (18) mit der Quertraverse (5) verbunden.

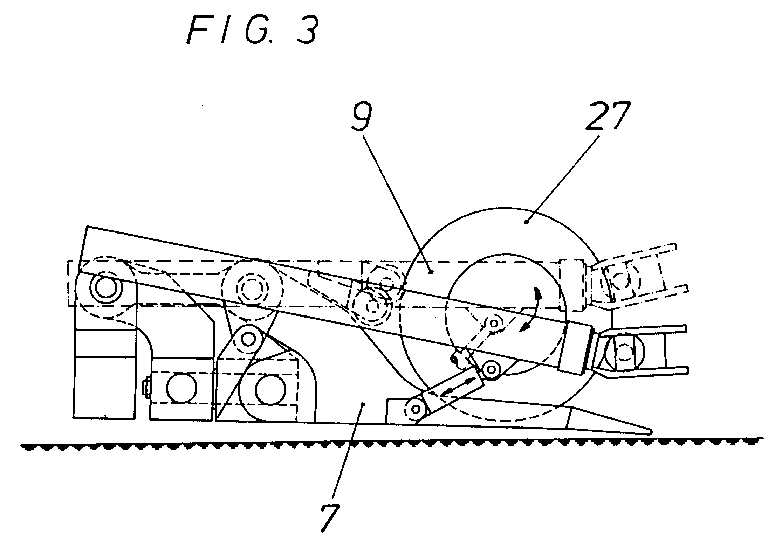

Fig.3 zeigt die Situation, bei der das Bugfahrwerk mit den Bugrädern (27) auf der Unterstützungsfläche (8) der Hubplattform (7) aufsitzt. Die Teleskoparme (9) haben mit ihren Greifarmen (10) die Bugräder umklammert.

Die gestrichelt dargestellten Teleskoparme (9) mit Greifarmen (10) sowie die Push-Out-Traverse (12) zeigen den Zustand nach Verzurrung der Bugräder (27) auf der Hubplattform (7).

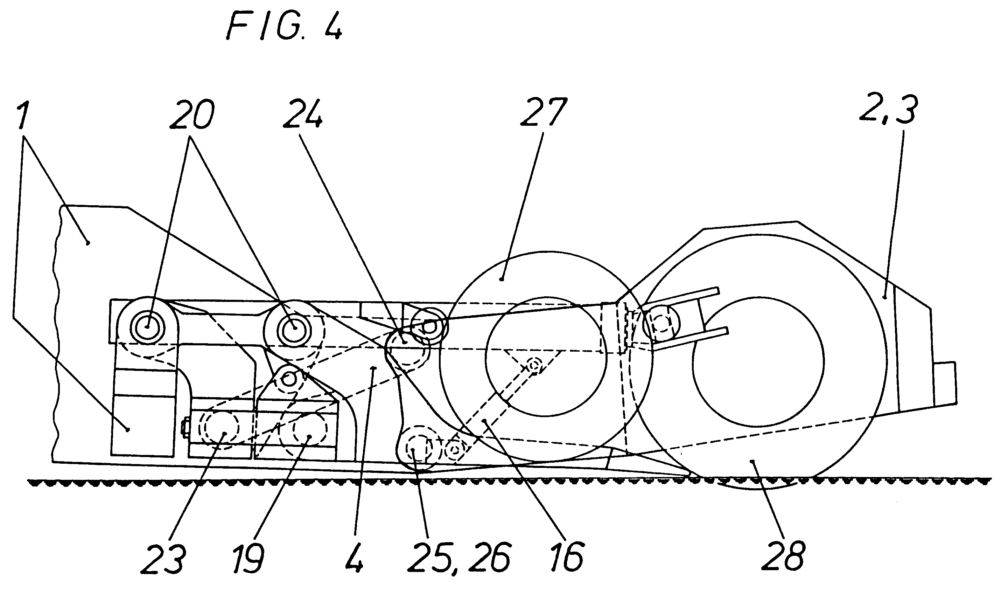

Fig.4 ähnelt Fig.3. Zusätzlich sind jedoch das komplette Fahrgestell-Hinterteil (2) mit Hinterrädern (28) und die Hubschwingen (3) erkennbar. Die Bugräder (27) befinden sich auf der Hubplattform (7). Das Fahrgestell-Hinterteil (2) ist über die Knickachse (26) abgeknickt, so daß sich die Hubplattform (7) mit ihrer Aufnahmeschräge noch auf bzw. etwas über der Fahrbahn befindet.

Gestrichelt dargestellt sind u.a. die Knickachse (26), ein Lager (25) der Knickachse, ein Koppelglied (4) mit dem Lager (23) an der Quertraverse (5) und dem Lager (24) an der Hubschwinge (3).

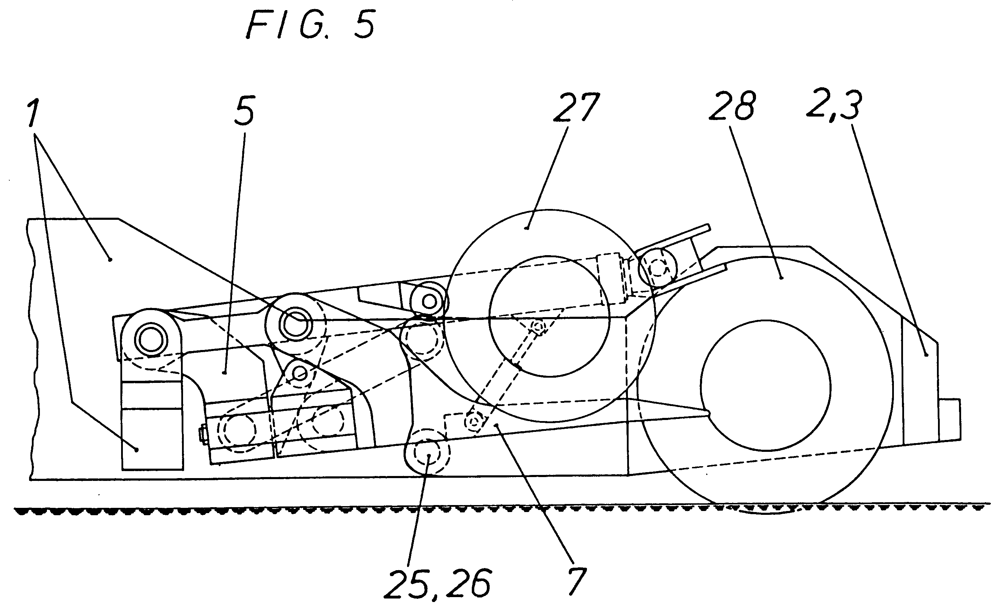

Fig.5 zeigt das Fahrgestell-Hinterteil (2) mit auf der Unterstützungsfläche (8) der Hubplattform (7) aufgenommenen und verzurrten Bugrädern (27) in Transportstellung. Das Schleppfahrzeug weist die gestreckte Stellung auf, d.h. das Fahrgestell-Hinterteil (2) ist über das Drehgelenk (Lager 25) der Knickachse (26) angehoben. Die Anhebung und Absenkung der Knickachse (26) geschieht, wie aus der EP 0 269 685 B1 bekannt, mit Hilfe von einem Paar hydraulischer Zylinder-Kolbenaggregate, die hier nicht dargestellt sind. Diese erstrecken sich auf beiden Seiten des Schleppers. Sie sind am Fahrgestell-Vorderteil und an den Hubschwingen angelenkt.

Die Figuren 4 und 5 zeigen deutlich (gestrichelt) die Kopplung der Bugrad-Aufnahmevorrichtung mit den Hubschwingen (3) des Fahrgestell-Hinterteils (2) über Koppelglieder (4).

Die Beschreibung der Vorgänge zur Aufnahme der Bugräder auf die Hubplattform, das Verzurren der aufgenommenen Bugräder, der anschließende Transport des Fugzeuges und das abschließende Absetzen des Bugfahrwerkes auf der Fahrbahn sind entbehrlich, da diese Abläufe aus dem Stand der Technik hinreichend geläufig sind.

### Bezugsziffernliste:

- 1: Fahrgestell-Vorderteil
- 2: Fahrgestell-Hinterteil
- 3: Hubschwingen
- 4: Koppelglieder
- 5: Quertraverse
- 6: Pendeltraverse
- 7: Hubplattform
- 8: Unterstützungsfläche von 7
- 9: Teleskoparme
- 10: Greifarme
- 11: Rollen an 10
- 12: Push-Out-Traverse
- 13: Rollen an 12
- 14: Verschiebeeinrichtung für 12
- 15: Längsführungen für 12
- 16: Stellglieder für 9
- 17: Längslenker
- 18: Pendelbolzen (mit Schwenklagern)
- 19: Schwenklager Hubplattform
- 20: Gelenklager der Längslenker
- 21: Schwenklager für Quertraverse (am Vorderteil 1)
- 22: Schwenklager für Teleskoparme an Pendeltraverse
- 23: Lager für Koppelglieder an 5
- 24: Lager der Koppelglieder an 3
- 25: Lager für Knickachse
- 26: Knickachse
- 27: Bugräder
- 28: Flugzeugschlepper-Hinterräder

## Patentansprüche

1. Flugzeugschlepper ohne Schleppstange mit einem mittels achsparalleler Knickachse (26) geteiltem Fahrgestell (1, 2), dessen angetriebene Vorderachse an einem Vorderteil (1) und dessen Hinterachsgetriebe an Hubschwingen (3) befestigt sind, wodurch das Hinterteil (2) des Fahrgestells eine gabelförmige Ausnehmung für das Bugfahrwerk (27) des Flugzeuges bildet und wobei eine Vorrichtung zur Aufnahme für das Bugfahrwerk (27) aus einer Hubplattform (7) mit Unterstützungsfläche (8) für die Bugräder des Bugfahrwerks, einer Pendeltraverse (6), Teleskoparmen (9) mit Greifarmen (10), einer Push-Out-Traverse (12), einer Quertraverse (5), Längslenkern (17) und einem Pendelbolzen (18) besteht,
wobei die Hubplattform (7), die Pendeltraverse (6) und die Teleskoparme (9) mechanisch über den Pendelbolzen (18) mit der Quertraverse (5) verbunden sind, so daß die genannten Elemente (7, 6, 9, 18, 5) nach beiden Seiten um die Längsachse des Fahrgestells schwenken können,
wobei die Längslenker (17) die Hubplattform (7) mit dem Vorderteil (1) des Fahrgestells verbinden und Freiheitsgrade aufweisen, die durch am Vorderteil (1) und an der Hubplattform (7) angeordnete Gelenklager (20) sichergestellt sind,
wobei die Teleskoparme (9) in Schwenklagern (22) an der Pendeltraverse (6) in vertikaler Richtung schwenkbar sind,
wobei eine Drehbewegung der Quertraverse (5) in vertikaler Richtung über Schwenklager (21) erfolgt,
wobei Koppelglieder (4) zur Kopplung der Aufnahmevorrichtung mit den Hubschwingen (3) des Fahrgestell-Hinterteils (2) vertikal schwenkbar um an der Quertraverse (5) und an den Hubschwingen (3) angeordnete Lager (23, 24) sind,
wobei die Hubschwingen (3) um über die zur Vorder- und Hinterachse des Flugzeugschleppers parallele Knickachse (26) und Lager (25) vertikal schwenkbar sind,
wobei bei der Schwenkbewegung der Pendeltraverse (6) um den Pendelbolzen (18) sich die Längslenker (17) zur jeweiligen Schwenkseite auslenken und die Hubplattform (7) eine vertikale Schwenkbewegung über horizontale Schwenklager (19), die an der Pendeltraverse (6) angelenkt sind, ausführt,
wobei die Teleskoparme (9) mit dem Greifarmen (10) und die Push-Out-Traverse (12) mit Hilfe einer Verschiebeeinrichtung (14) hin- und herschiebbar sind, wobei Push-Out-Traverse (12) und Verschiebeeinrichtung (14) mittels Schwenklagern (22) auf der Pendeltraverse (6) und über Stellglieder (16) stufenlos höhenverstellbar an der Hubplattform (7) angelenkt sind und,
wobei die Quertraverse (5) mit den Schwenklagern (21) am Vorderteil (1) des Fahrgestells angelenkt ist.

2. Flugzeugschlepper nach Anspruch 1,
dadurch gekennzeichnet,
daß die Koppelglieder (4) längenverstellbar sind.

## Claims

1. Aircraft tug without a draw bar having a chassis (1, 2) which is divided by means of an axle-parallel articulated shaft (26), the driven front axle of which chassis is secured to a front part (1) and the rear axle gearing of which is secured to lifting links (3), as a result of which the rear part (2) of the chassis forms a fork-shaped recess for the nose landing gear (27) of the aircraft and wherein a device for accommodating the nose landing gear (27) consists of a lifting platform (7) with a supporting surface (8) for the nose wheels of the nose landing gear, a pendulum beam (6), telescoping arms (9) with gripping arms (10), a push-out beam (12), a transverse beam (5), longitudinal connecting rods (17) and a pendulum pin (18),
wherein the lifting platform (7), the pendulum beam (6) and the telescoping arms (9) are mechanically connected to the transverse beam (5) via the pendulum pin (18), such that said elements (7, 6, 9, 18, 5) can pivot to both sides about the longitudinal axis of the chassis,
wherein the longitudinal connecting rods (17) connect the lifting platform (7) to the front part (1) of the chassis and have degrees of freedom which are ensured by articulated bearings (20) which are arranged on the front part (1) and on the lifting platform (7), wherein the telescoping arms (9) are pivotable in the vertical direction in pivot bearings (22) on the pendulum beam (6),
wherein a rotational movement of the transverse beam (5) in the vertical direction is performed by means of pivot bearings (21),
wherein coupling members (4), for coupling the accommodating device to the lifting links (3) of the rear part (2) of the chassis are arranged such that they are vertically pivotable about bearings (23, 24) which are arranged on the transverse beam (5) and on the lifting links (3),
wherein the lifting links (3) are vertically pivotable by means of the articulated shaft (26), which is parallel to the front and rear axles of the aircraft tug, and the bearing (25),
wherein in the case of the pivoting movent of the pendulum beam (6) about the pendulum pin (18) the longitudinal connecting rods (17) deflect to the pivot side in each case and the lifting platform (7) performs a vertical pivoting movement via horizontal pivot bearings (19) which are connected in an articulated manner to the pendulum beam (6),
wherein the telescoping arms (9) with the gripping arms (10) can be pushed back and forth and the push-out beam (12) can be pushed back and forth with the aid of a displacement device (14),
wherein the push-out beam (12) and the displacement device (14) are mounted in an articulated manner by means of pivoting bearings (22) on the pendulum beam (6), and connected in an articulated manner to the lifting platform (7) in such a manner that their height may be continuously adjusted by means of setting members,
and wherein the transverse beam (5) is articulated on the front part (1) of the chassis by means of the pivot bearings (21).

2. Aircraft tug according to Claim 1,
characterised in that the coupling members (4) are longitudinally adjustable.

## Revendications

1. Tracteur de remorquage d'avions sans utilisation de barre d'attelage, comportant un châssis roulant (1, 2) divisé par un axe de pliage (26) parallèle aux essieux, dans lequel :
- l'essieu avant moteur est fixé à la partie avant (1) du châssis tandis que l'ensemble de l'essieu arrière est fixé à des coulisses de levage (3) ;
- la partie arrière (2) du châssis roulant présente une ouverture en forme de fourche pour recevoir le train d'atterrissage avant (27) de l'avion ;
- un dispositif sert à prendre en charge le train d'atterrissage avant (27), il est composé d'une plate-forme de levage (7) comportant une surface porteuse (8) des roues du train d'atterrissage avant, une traverse pendulaire (6), des bras télescopiques (9) équipés de bras de saisie (10), une traverse push-out (12) une traverse transversale (5), des bras oscillants longitudinaux (17) et un axe du mouvement pendulaire (18),
caractérisé en ce que :
- la plate-forme de levage (7), la traverse pendulaire (6) et les bras télescopiques (9) sont reliés mécaniquement, par l'intermédiaire de l'axe (18) à la traverse transversale (5) de sorte que les éléments indiqués (7, 6, 9, 18, 5) peuvent s'incliner des deux côtés autour de l'axe longitudinal du châssis roulant ;
- les bras oscillants longitudinaux (17) relient la plate-forme (7) à la partie avant (1) du châssis roulant et présentent des degrés de libertés assurés par des paliers articulés (20) montés sur la partie avant (1) et la plate-forme (7) ;
- les bras télescopiques (9) peuvent osciller en direction verticale dans des paliers (22) portés par la traverse pendulaire (6) ;
- la traverse transversale (5) tourne en direction verticale autour de paliers (21) ;
- des organes d'accouplement (4), pour relier le dispositif de réception aux coulisses de levage (3) de la partie arrière (2) du châssis peuvent osciller verticalement autour de paliers (23, 24) montés sur la traverse transversale et sur les coulisses de levage (3) ;
- les coulisses de levage (3) peuvent osciller verticalement autour de l'axe de pliage (26) et de paliers (25) parallèles à l'essieu arrière du tracteur ;
- pendant le mouvement d'oscillation de la traverse pendulaire (6) autour de l'axe pendulaire (18), les bras oscillants longitudinaux (17) s'inclinent chacun corrélativement et la plate-forme de levage (7) exécute un mouvement vertical d'oscillation autour de paliers horizontaux (19) articulés à la traverse pendulaire (6) ;
- les bras télescopiques (9) avec leurs bras de saisie (10) et la traverse push-out (12) peuvent coulisser dans les deux sens sous l'action d'un dispositif (14), la traverse push-out (12) et le dispositif de coulissement (14) étant articulés à la plate-forme de levage (7), au moyen de paliers d'oscillation (22) montés sur la traverse pendulaire (6), avec possibilité de réglage continu en hauteur par l'intermédiaire d'organes de réglage (16) ;
- la traverse transversale (5) est reliée par des paliers d'oscillation (21) à la partie avant (1) du châssis roulant du tracteur.

2. Tracteur de remorquage d'avions selon la revendication 1,
caractérisé en ce que
les organes d'accouplement (4) sont réglables en longueur.
